# EUROPÄISCHE PATENTSCHRIFT

(11) **EP 2 849 541 B1**
(45) Veröffentlichungstag und Bekanntmachung des Hinweises auf die Patenterteilung: **21.07.2021**
(21) Anmeldenummer: 14181472.3
(22) Anmeldetag: 19.08.2014
(51) Int. Cl.: H04B 10/116, H05B 47/175

(54) **Verfahren zum Bereitstellen von Leuchtenparametern an einer Schnittstelle einer Leuchte, Leuchte mit einer Schnittstelle zum Auslesen von Leuchtenparametern und Vorrichtung zum Auslesen der Leuchtenparameter**
Method for providing lamp parameters at an interface of a lamp, lamp with an interface for the reading of light parameters and device for selecting the lamp parameters
Procédé de préparation de paramètres d'éclairage sur une interface d'un éclairage, éclairage doté d'une interface destiné à la lecture de paramètres d'éclairage et dispositif de lecture de paramètres d'éclairage

(30) Priorität: 22.08.2013 DE 102013109085
(43) Veröffentlichungstag der Anmeldung: 18.03.2015
(73) Patentinhaber: INOTEC Sicherheitstechnik GmbH, 59469 Ense (DE)
(72) Erfinder: Ziemkus, Andreas, 59755 Arnsberg (DE); Lehmkühler, Robert, 59505 Bad Sassendorf (DE)
(74) Vertreter: Graefe, Jörg

(56) Entgegenhaltungen:
- EP-A1- 2 007 040
- EP-A1- 2 453 719
- WO-A1-2007/095740
- WO-A1-2007/099472
- WO-A2-02/25842
- WO-A2-2008/002318
- US-A1- 2006 056 855
- None

## Beschreibung

Die vorliegende Erfindung betrifft ein Verfahren zum bitweisen Übertragen von Leuchtenparametern über eine Schnittstelle einer Notleuchte nach dem Oberbegriff des Anspruchs 1.

Außerdem betrifft die Erfindung eine Notleuchte mit einer Schnittstelle zum Auslesen von Leuchtenparametern und eine Anordnung aus einer Notleuchte und einer Vorrichtung zum Auslesen der Leuchtenparameter aus den Notleuchten.

Der Beleuchtungszustand der Leuchte ist der Zustand, den man als technischer Laie als Ein-Zustand der Leuchte bezeichnen würde, der Nicht-Beleuchtungszustand ist der Zustand, den man als technischer Laie als Aus-Zustand der Leuchte bezeichnen würde und in dem eine Beleuchtung nicht stattfindet.

Aus dem Dokument EP 2 453 719 A1 ist eine Notleuchte mit Leuchtmitteln bekannt, wobei die Leuchtmittel zugleich die Schnittstelle der Notleuchte bilden, und die Leuchte in einem Beleuchtungszustand zum Zwecke der Beleuchtung für das menschliche Auge sichtbares Licht erzeugt und in einem Nicht-Beleuchtungszustand, wenn eine Beleuchtung durch die Notleuchte nicht erfolgen soll, kein Licht erzeugt. Diese Notleuchte weist eine in dem Dokument als Steuerstufe bezeichnete Einheit auf, die in der Lage ist, Leuchtmittel der Leuchte ein- und auszuschalten, um so ein für den Menschen sichtbares Blinkmuster zu erzeugen. Das Blinkmuster kann eine Adresse der Leuchte, also einen Parameter der Leuchte angeben. Aus dem Dokument EP 2 453 719 A1 ist dadurch auch ein Verfahren zum Bereitstellen von Leuchtenparametern an einer Schnittstelle einer Notleuchte bekannt, wobei die Schnittstelle durch die Leuchtmittel der Leuchte gebildet wird.

Wenn nun eine Person die Adresse der Notleuchte in Erfahrung bringen möchte, muss sie das Blinksignal mit den Augen aufnehmen. Erst dann kann es von der Person oder nach Eingabe in eine dazu vorgesehene Vorrichtung von eben dieser weiter verarbeitet werden. Die Aufnahme des Blinksignals durch einen Menschen mittels dessen Augen ist fehleranfällig, weshalb die Notleuchte verbesserungswürdig ist. Außerdem kann das Blinken der Leuchte Dritte stören.

Aus dem Dokument WO 2007/095740 A1 ist eine Leuchte bekannt, die ein Blinksignal erzeugen kann. Das Blinksignal kann ein Identifikationsmerkmal der Leuchte, ebenfalls ein Leuchtenparameter, wiedergeben. Das Blinksignal ist in das von der Leuchte im Beleuchtungszustand erzeugtem Licht enthalten und für einen Menschen nicht wahrnehmbar. Aus dem Dokument WO 2007/095740 A1 ist ferner eine Vorrichtung bekannt, mit der das Blinksignal gelesen und somit das Identifikationsmerkmal aus der Leuchte ausgelesen werden kann.

Auch aus dem Dokument WO 2008/002318 ist eine Beleuchtungseinheit bekannt, die zur Übertragung von Informationen genutzt werden kann. Das Dokument offenbart die Benutzung von elektromagnetischen Strahlungen im Frequenzbereich des sichtbaren Lichtes und im Frequenzbereich außerhalb des sichtbaren Lichtes zur Übertragung der Daten.

Aus dem Dokument US 2006/0239689 ist ein Verfahren bekannt, bei dem zu einem ersten Signal ein zweites, eine Information enthaltendes, moduliertes Signal addiert wird, um Informationen mit dem von einer Leuchte ausgestrahlten Licht zu übertragen. Das erste Signal ist dabei der Lichtstrom, welcher zu Beleuchtungszwecken erzeugt wird. Das erste Signal kann ein moduliertes Signal sein. Das zweite Signal dient dagegen nicht der Beleuchtung sondern ausschließlich der Informationsübertragung. Die Frequenz der Modulation des zweiten Signals ist so schnell, dass ein Mensch den durch das zweite Signal hervorgerufenen Lichtstrom aufgrund der Trägheit des menschlichen Auges (Tiefpassverhalten des menschlichen Auges) als kontinuierlichen Lichtstrom wahrnimmt. Durch die Addition des zweiten Signals zum ersten Signal, wird der von einem Leuchtmittel der Leuchte erzeugte Lichtstrom größer als es eigentlich für die Beleuchtungszwecke notwendig oder gewünscht ist. Diese Vergrößerung des Lichtstroms, die durch das zweite Signal erfolgt, ist für einen Menschen als größere Helligkeit wahrnehmbar. Die Addition des zweiten Signals auf das erste Signal ist also für den Menschen wahrnehmbar wenn auch die Informationsübertragung im zweiten Signal als solche für den Menschen unsichtbar bleibt. Eine Notleuchte ist in dem Dokument nicht beschrieben.

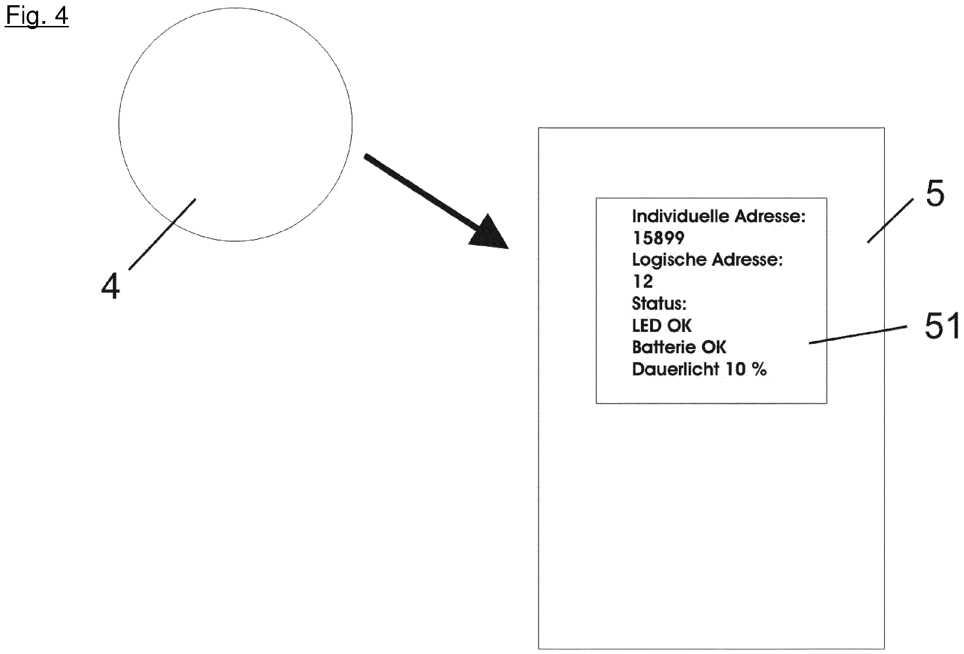

Das Dokument WO 02/25842 A1 beschreibt ebenfalls ein Verfahren zur Übertragung von Informationen mit Leuchten (siehe dort Fig. 4). Die Leuchten benutzen zur Einstellung der für Beleuchtungszwecke benötigten Helligkeit der Leuchte eine Pulsbreitenmodulation (PMW). Durch den gewählten Tastgrad wird die Helligkeit der Leuchte eingestellt. Das dazu erzeugte PWM-Signal wird mit einem Signal zur Informationsübertragung in einem XOR-Gatter verknüpft. Die in dem Signal zur Informationsübertragung enthaltenen Informationen werden in einem ersten Abschnitt während des Pulses des PWM-Signals digital übertragen. In der Pause zwischen zwei Pulsen des PWM-Signals wird in unmittelbarem Anschluss an den Puls des PWM-Signals der erste Abschnitt des Signals zur Informationsübertragung als zweiter Abschnitt wiederholt, aber dabei invertiert. Das hat zur Folge, dass die Pulse im ersten Abschnitt und im zweiten Abschnitt des Signals zur Informationsübertragung zusammen eine gleiche Länge haben wie der Puls des PWM-Signals. Das gleiche gilt auch für das Signal, dass durch die XOR-Verknüpfung entsteht und welches das Leuchtmittel ansteuert. Das Leuchtmittel wird als Folge während einer Periode des PWM-Signals vom Signal am Ausgang des XOR-Gatters genauso lange eingeschaltet wie durch das PWM-Signal. Die Leuchte ändert durch die Verknüpfung des PWM-Signals mit dem Signal zur Informationsübertragung seine Helligkeit nicht.

Ein Nachteil dieser Art der Informationsübertragung ist aber, dass die Leuchte mittels der PWM maximal mit einem Tastgrad von 50% gedimmt werden kann. Nur dann ist es möglich, den ersten Abschnitt des Signals zur Informationsübertragung zur invertieren und als zweiten Abschnitt an den ersten Abschnitt anzuhängen. Eine Notleuchte ist in dem Dokument nicht beschrieben.

Im Dokument WO 2009/010909 A1 ist ein weiteres Verfahren zur Informationsübertragung mit Leuchten, aber nicht mit Notleuchten beschrieben. Ferner wird auf das Dokument US 2006/056855 A1 und WO 2007/099472 A1 hingewiesen.

Der Erfindung lag die Aufgabe zugrunde, ein Verfahren zum Übertragen von Leuchtenparametern über eine Schnittstelle einer Notleuchte zu einer Auslesevorrichtung, eine Notleuchte und eine Anordnung aus einer Notleuchte und einer Auslesevorrichtung zum Auslesen von Leuchtenparametern aus Notleuchten vorzuschlagen, mit welchen eine Übertragung von Leuchtenparametern nicht nur möglich ist, ohne dass es zu Fehlern bei der Aufnahme eines Blinksignal durch einen Menschen kommen kann, ohne dass es einen Dritten stören kann und ohne dass die vom Menschen wahrgenommene Helligkeit der Leuchte geändert wird. Ein weiterer Aspekt der Erfindung ist es, ein Verfahren vorzuschlagen, mit dem es möglich ist, die zu Beleuchtungszwecken gewünschte Helligkeit der Notleuchte durch die Bereitstellung der Leuchtenparameter nicht zu beeinflussen.

Diese Aufgabe wird im Hinblick auf das Verfahren durch das erfindungsgemäße Verfahren nach Anspruch 1 gelöst.

Nach dem erfindungsgemäßen Verfahren zum Bereitstellen von Leuchtenparametern an einer Schnittstelle einer Notleuchte ist eine Besonderheit, dass im Beleuchtungszustand Leuchtenparameter für das menschliche Auge unsichtbar im Wellenlängenbereich des sichtbaren Lichtes übertragen werden. Damit ist es möglich, Leuchtenparameter aus im störungsfreien Betrieb eingeschalteten Leuchten in Dauerlichtschaltung zu übertragen, ohne dass dazu der Zustand der Leuchte geändert (vom Beleuchtungszustand zum Nicht-Beleuchtungszustand) werden muss.

Die Codierung der Leuchtenparameter in dem von der Leuchte abgestrahltem Lichtsignal kann dabei gemäß einem Signalübertragungsprotokoll, insbesondere gemäß einem Signalübertragungsprotokoll für Licht im sichtbaren Wellenlängenbereich erfolgen.

Gemäß dem erfindungsgemäßen Verfahren wird im Beleuchtungszustand der Leuchte das Licht pulsbreitenmoduliert, um die mittlere Helligkeit des von dem Leuchtmittel zum Zweck der Beleuchtung erzeugbaren Lichtes einzustellen. In einem solchen Fall wird während eines Pulses, dessen Breite zur Einstellung der mittleren Helligkeit des Lichtes vorgegeben ist, für ein erstes Zeitintervall oder höchstens zwei erste Zeitintervalle das Leuchtmittel zum Codieren der Informationen ausgeschaltet oder unterbrochen. Um eine Änderung des Tastgrades und damit der vom Menschen wahrnehmbaren Helligkeit der Leuchte zu verhindern, ist die Unterbrechung des Pulses für das erste Zeitintervall oder die höchsten zwei ersten Zeitintervalle vorteilhaft. Dann wird nach den Unterbrechungen, d.h. nach dem Ablauf des ersten Zeitintervalls bzw. der höchsten zwei ersten Zeitintervalle, der Puls fortgesetzt, bis er seine ursprüngliche, für die Einstellung der Helligkeit der Leuchte gewünschte Breite erreicht hat. Mit anderen Worten wird die Zeitdauer des ursprünglich von einem Pulsbreitenmodulator erzeugten Pulses, dessen Breite zur Einstellung der mittleren Helligkeit des Lichtes vorgegeben ist, um Ausschaltzeit, d.h. die Zeitdauer des ersten Zeitintervalls oder der ersten Zeitintervalle verlängert, um die Ausschaltzeit während des ersten Zeitintervalls oder der ersten Zeitintervalle zu kompensieren.

Das Unterbrechen des Pulses für das erste Zeitintervall oder die ersten Zeitintervalle und das Fortsetzen des Pulses bis zu dem Zeitpunkt, an dem der Puls trotz der Unterbrechungen in der Summe der durch die Unterbrechungen entstandenen Abschnitte des Pulses die von dem Pulsweitenmodulator vorgegebene Länge erreicht hat, hat aber nicht nur den Vorteil, dass die Helligkeit der Leuchte für das menschliche Auge unverändert bleibt. Es hat den weiteren Vorteil, dass deutlich größere Tastgrade erreicht werden können, als zum Beispiel mit dem aus dem Dokument WO 02/25842 A1 bekannten Verfahren. Der maximale Tastgrad wird bei diesem erfindungsgemäßen Verfahren durch die Dauer der Unterbrechung des Pulses bzw. die Summe der Dauer der Unterbrechungen des Pulses bestimmt. Mit anderen Worten ausgedrückt, entspricht die maximale Pulsdauer der Länge der Periode des PWM-Signals abzüglich des ersten Zeitintervalls oder der Summe der ersten Zeitintervalle.

Möglich wird ein erfindungsgemäßes Verfahren durch eine Notleuchte, mit den Merkmalen des Anspruchs 2.

Ein erfindungsgemäße Notleuchte hat einen Schaltkreis der außer zur Modulation des nicht für das menschliche Auge sichtbaren Lichts zum Zwecke des Codierens von Leuchtenparametern in dem Licht auch zum Modulieren des von dem Leuchtmittel im Beleuchtungszustand erzeugbaren Lichts zum Zweck des Einstellens der mittleren Helligkeit im Beleuchtungszustand erzeugbaren Lichts geeignet und eingerichtet ist. Dadurch ist es möglich, die mittlere, vom Menschen in der Regel wahrgenommene Helligkeit des von der Leuchte im Beleuchtungszustand abgestrahlten Lichtes einzustellen. Diese Einstellung der mittleren Helligkeit erfolgt vorteilhaft unabhängig von der Modulation zur Codierung der Leuchtenparameter. Zur Einstellung der mittleren Helligkeit erfolgt ebenfalls eine Modulation des vom Leuchtmittel erzeugten Lichtes. Die Modulation des Lichtes zur Einstellung der mittleren Helligkeit erfolgt durch eine Pulsmodulation. Die Pulsmodulation erfolgt mit einer Frequenz, die so groß ist, dass Pulse und Pausen im abgestrahlten Licht nicht für das menschliche Auge erkennbar sind. Beide Modulationen, die zur Einstellung der mittleren Helligkeit und die zur Codierung der Leuchtenparameter stören vorteilhaft einander nicht oder zumindest nicht in einem für das menschliche Auge wahrnehmbaren Maß.

Mittels des Schaltkreises ist für den Beleuchtungszustand der Leuchte das Licht pulsbreitenmodulierbar, um die mittlere Helligkeit des von dem Leuchtmittel zum Zweck der Beleuchtung erzeugbaren Lichtes einzustellen. Die Pulsbreitenmodulation, auch Pulsweitenmodulation genannt, hat den Vorteil, dass bei hinreichend hoher Taktung Pulspausen im von der Leuchte abgestrahlten Licht nicht wahrnehmbar sind. Die Länge der Pulspause und deren Verhältnis zur Pulslänge bzw. zur Taktlänge beeinflusst dagegen die mittlere Helligkeit des Lichtes unmittelbar.

Gemäß der Erfindung ist mittels des Schaltkreises während eines Pulses, dessen Breite zur Einstellung der mittleren Helligkeit des Lichtes vorgegeben ist, für wenigstens ein erstes Zeitintervall das Leuchtmittel zum Codieren der Leuchtenparameter ausschaltbar und/oder die Farbe und/oder der Augenblickswert der Helligkeit des von dem Leuchtmittel erzeugbaren Lichtes änderbar.

Durch das Ausschalten des Leuchtmittels während des ersten Zeitintervalls wird die mittlere Helligkeit beeinflusst. Das kann für einen Menschen wahrnehmbar sein. Auch wird die durch die PWM eingestellte Helligkeit des Lichtes nicht erreicht, wenn der Puls für das oder die höchstens zwei ersten Zeitintervalle ausgeschaltet wird. Daher wird, wenn der Puls unterbrochen wird und nach dem Verstreichen des ersten Zeitintervalls oder der ersten Zeitintervalle, der Puls mit der verbleibenden Länge fortgesetzt. Mit anderen Worten wird der Puls, dessen Breite zur Einstellung der mittleren Helligkeit des Lichtes vorgegeben ist, um die Länge des ersten Zeitintervalls oder der höchstens zwei ersten Zeitintervalle über seinen von der PWM vorgesehenen Endzeitpunkt verlängert.

Das erste Zeitintervall sollte deutlich kürzer als die Einschaltzeit des PWM-Trägersignals, d.h. die Pulsbreite sein.

Beispielsweise kann bei einer Frequenz eines PWM-Trägersignals von f=400 Hz und einem Tastgrad von 1%, das ergibt eine Einschaltzeit (Pulsdauer, -länge oder -breite) von Tein = 1/f * Tastgrad/100% = 0,000025 S = 25 µs bzw. eine Ausschaltzeit (Pulspause) von Taus = 1/f * (100%-Tastgrad)/100% = 0,002475 S = 2475 µs, eine geeignete Länge des ersten und des zweiten Zeitintervalls Tein / 10 = 2,5 µs sein.

Bei den Leuchtenparametern, die in Licht für das menschliche Auge unsichtbar codiert übertragen werden können, kann es sich um das Alter des Leuchtmittels, das Herstellungsdatum des Leuchtmittels, die Anzahl der Betriebsstunden des Leuchtmittels, eine maximale Temperatur des Leuchtmittels, die Anzahl der Schaltzyklen des Leuchtmittels, das Alter einer Batterie des Leuchtmittels, das Herstellungsdatum der Batterie des Leuchtmittels, Anzahl der Betriebsstunden der Batterie, eine Temperatur der Batterie, eine maximale Temperatur der Batterie, eine minimale Temperatur der Batterie, die Anzahl der Ladezyklen der Batterie, die Bestimmung der Leuchte als Dauerlicht- oder Bereitschaftslichtleuchte, den Ort der Leuchte, und/oder einen Namen, zum Beispiel einen Personennamen umfassen. Ferner kann ein Leuchtenparameter ein Fehlercode sein, mit welchem ein Fehler bezeichnet wird, der durch die Leuchte selbst erkannt worden ist. Zur Erkennung von Fehlern kann die Leuchte ein Mittel zur Funktionsprüfung aufweisen.

Ein Schaltkreis erfindungsgemäßen Notleuchte kann einen ersten Schaltkreisteil aufweisen, der einen ersten Ausgang für ein erstes moduliertes Signal, vorzugsweise ein pulsbreitenmoduliertes Signal hat, welches der Einstellung der Helligkeit des Leuchtmittels dient. Dieser erste Schaltkreisteil kann ein Mikrokontroller sein. Der erste Ausgang kann mit einem ersten Eingang eines Mittels zur logischen Verknüpfung verbunden sein. Bei dem Mittel zur logischen Verknüpfung kann es sich um ein Und-Gatter handeln.

Ein Schaltkreis einer erfindungsgemäßen Notleuchte kann einen Schaltkreisteil aufweisen, der einen zweiten Ausgang für ein zweites moduliertes Signal hat, welches der Codierung der Leuchtenparameter dient. Dieser Schaltkreisteil kann ein Mikrokontroller sein. Der Schaltkreisteil kann mit dem ersten Schaltkreisteil identisch sein oder ein zweiter Schaltkreisteil sein. Der zweite Ausgang kann mit einem zweiten Eingang des Mittels zur logischen Verknüpfung verbunden sein.

Der Ausgang des Mittels kann zur logischen Verknüpfung mit einem Steuereingang eines steuerbaren Schalters verbunden sein, der in Reihe zu dem Leuchtmittel oder den Leuchtmitteln der Leuchte angeordnet ist.

Der erste Schaltkreisteil oder ggf. der zweite Schaltkreisteil können einen Eingang aufweisen, der mit dem ersten Ausgang verbunden ist. Innerhalb des ersten oder des zweiten Schaltkreises kann dieser Eingang mit einem Mittel zur Erkennung von Flanken, d.h. von steigenden oder fallenden Flanken in dem am Eingang anliegenden Signal, dem ersten modulierten Signal, verbunden sein. Das Mittel zur Erkennung von Flanken kann mit einem Mittel zur Erzeugung des zweiten modulierten Signals verbunden sein, welches in Abhängigkeit von einer erkannten Flanke das zweite modulierte Signal erzeugt. Die Abhängigkeit besteht vorzugsweise darin, dass durch den Zeitpunkt einer steigenden oder fallenden Flanke der Beginn eines Taktes für die Modulation zur Codierung der Leuchtenparameter festgelegt wird. Das Mittel zur Erzeugung des zweiten modulierten Signals kann zum Beispiel nach einer steigenden Flanke, d.h. zu Beginn eines Pulses des ersten modulierten Signals, zunächst einen Puls erzeugen, um dann zeitverzögert aber noch während des Pulses im ersten modulierten Signal eine Pause zu erzeugen. Diese Pause hat die Länge des ersten Zeitintervalls und ist sehr kurz im Vergleich zur Länge des ersten Pulses. Die Pause im zweiten modulierten Signal führt bei einer Und-Verknüpfung des ersten und des zweiten modulierten Signals zu einer Pause im am Steuereingang des steuerbaren Schalters anliegenden Signal, was zu einer Pause in dem von den Leuchtmitteln abgestrahlten Licht führt.

Vorteilhaft ist es, wenn der erste Schaltkreisteil so eingerichtet ist, dass die Pulsbreite des Pulses des ersten modulierten Signals um die Länge des oder der Summe der ersten Zeitintervalle, also der Länge der Pausen während des Pulses des ersten modulierten Signals, vergrößert wird.

Mit einem erfindungsgemäßen Verfahren bzw. einem erfindungsgemäßen Schaltkreis wird durch das zweite modulierte Signal während eines Pulses des ersten modulierten Signals nur ein Bit codiert. Das kann in der Weise erfolgen, dass zur Codierung einer 0 eine Unterbrechung und zur Codierung einer 1 zwei Unterbrechungen des Pulses des ersten modulierten Signals erfolgt. Erfolgt keine Unterbrechung des Pulses des ersten modulierten Signals, wird kein zweites moduliertes Signal übertragen.

Eine erfindungsgemäße Notleuchte ist mit einer Schnittstelle zum Auslesen von Leuchtenparametern ausgestattet, wobei die Leuchte mindestens ein Leuchtmittel zum Erzeugen von Licht zum Zwecke der Beleuchtung und das Leuchtmittel zugleich die Schnittstelle der Leuchte bildet, wobei die Leuchte mindestens einen erfindungsgemäßen elektronischen Schaltkreis aufweist.

Schließlich ist auch eine Anordnung aus einer erfindungsgemäßen Notleuchte und einer Vorrichtung zum Auslesen der Leuchtenparameter eine erfindungsgemäße Lösung der Aufgabe, wenn die Vorrichtung ein Erkennungsmittel umfasst, mit welchem nicht sichtbares moduliertes Licht im sichtbaren Wellenlängenbereich erkennbar ist. Eine Auslesevorrichtung ist geeignet und eingerichtet, das schnelle Blinksignal einer erfindungsgemäßen Leuchte zu erkennen, welches für einen Menschen nicht erkennbar ist.

Ein Erkennungsmittel einer Auslesevorrichtung einer erfindungsgemäßen Anordnung kann ein Lichtsensor, insbesondere eine Fotodiode zum Aufnehmen und Wandeln des erkannten nicht sichtbaren modulierten Lichts in ein analoges elektrisches Signal aufweisen. Ferner kann das Erkennungsmittel zumindest einen Verstärker, insbesondere einen Transimpedanzverstärker zum Verstärken des analogen elektrischen Signals aufweisen, dessen Eingang mit einem Ausgang des Lichtsensors verbunden ist. Mit einem Transimpedanzverstärker wird auch ein kleiner, von einer Fotodiode erzeugter Strom so verstärkt, dass eine Weiterverarbeitung des Signals am Ausgang der Fotodiode möglich ist.

Das Erkennungsmittel kann einen Tiefpass- oder Bandpassfilter zum Filtern des analogen elektrischen Signals der Fotodiode und/oder des Verstärkers aufweisen. Vorzugsweise ist der Filter ein zweipoliger Butterworth-Filter, mit dem der Ausgang des Transimpedanzverstärkers auf den invertierenden Eingang des Transimpedanzverstärkers zurückgekoppelt ist.

Gemäß der Erfindung kann dem Transimpedanzverstärker ein weiterer Verstärker nachgeschaltet sein. Dieser weitere Verstärker kann dafür verwendet sein, das Ausgangssignal des Transimpedanzverstärkers in Abhängigkeit des Signalpegels weiter zu verstärken, um den Signalpegel einem für die weitere Verarbeitung insbesondere in einem Mikrokontroller vorteilhaften Signalpegel anzupassen. Da das von der Fotodiode aufgenommene Licht aufgrund der Helligkeit des Leuchtmittels und aufgrund der Entfernung der Fotodiode von dem Leuchtmittel sehr stark variieren kann, ist es sinnvoll, den Signalpegel für das Decodieren der in dem Licht codierten Informationen auf einen gewünschten Signalpegel am Eingang eines Decoders anzupassen. Dazu ist der weitere Verstärker so eingerichtet, dass die Verstärkung einstellbar ist. Im Unterschied dazu ist die Verstärkung des Transimpedanzverstärkers vorzugsweise fest eingestellt.

Eine Auslesevorrichtung einer erfindungsgemäßen Anordnung weist einen Decoder auf, mit welchem Informationen aus dem erkannten, nicht sichtbaren modulierten Licht decodierbar sind. Der Decoder kann einen Mikrocontroller aufweisen, welcher das analoge elektrische Signal digitalisiert und die im digitalisierten Signal enthaltenen Informationen, insbesondere Leuchtenparameter, decodiert.

Eine Auslesevorrichtung einer erfindungsgemäßen Anordnung weist eine Schnittstelle auf, an welcher die decodierten Informationen zum Auslesen bereitstellbar sind. Über diese Schnittstelle kann die Information zum Beispiel an einen Computer oder eine Steuereinheit einer Notlicht- oder Sicherheitsstromeinrichtung übertragen werden. Die Schnittstelle kann eine Bluetooth-Schnittstelle oder eine andere Schnittstelle zur drahtlosen Kommunikation der decodierten Informationen zu einem Telefon, insbesondere einem Smartphone, einem Handheld, einem Palmtop, einem Tablet-Computer, einem Pocketcomputer, einem PDA, einem Notebook, einem Subnotebook, einem E-Book-Lesegerät, einem GPS-Gerät, einem Laptop, einem PC o.ä. sein.

Für einen Benutzer ist es besonders von Vorteil, dass die Auslesevorrichtung einer erfindungsgemäßen Anordnung ein Wiedergabemittel aufweist, mit welchem die decodierten Informationen optisch und/oder akustisch darstellbar sind. Bei dem Wiedergabemittel kann es sich um eine Anzeigeeinheit handeln.

Die Auslesevorrichtung einer erfindungsgemäßen Anordnung kann ein Telefon, insbesondere ein Smartphone, ein Handheld, ein Palmtop, ein Tablet-Computer, ein Pocketcomputer, ein PDA, ein Notebook, ein Subnotebook, ein E-Book-Lesegerät, ein GPS-Gerät, ein MP3-Player, Laptop o.ä. sein.

Weitere Merkmale und Vorteile der vorliegenden Erfindung werden deutlich anhand der nachfolgenden Beschreibung unter Bezugnahme auf die beiliegenden Abbildungen. Darin zeigen
- Fig. 1: eine vereinfachte, schematische Darstellung eines erfindungsgemäßen Schaltkreises,
- Fig. 2: Darstellungen von Lichtsignalen, in welchen Informationen codiert sind,
- Fig. 3: Darstellungen von Lichtsignalen mit verschiedenen Codierungsarten und
- Fig. 4: eine vereinfachte, schematische Darstellung einer Auslesevorrichtung einer erfindungsgemäßen Anordnung.
- Fig. 5: eine vereinfachte, schematische Darstellung einer Anordnung einer erfindungsgemäßen Notleuchte, einer Auslesevorrichtung einer erfindungsgemäßen Anordnung und einem Smartphone,
- Fig. 6: eine vereinfachte, schematische Darstellung von drei Pulsen des Lichtstroms einer erfindungsgemäßen Notleuchte, in dem kein Bit, ein Bit mit dem Wert 0 und ein Bit mit dem Wert 1 übertragen werden.
- Fig. 7: eine vereinfachte, schematische Darstellung des Aufbaus einer Auslesevorrichtung einer erfindungsgemäßen Anordnung mit einer Bluetooth-Schnittstelle zur Übertragung von aus dem Licht decodierten Informationen an ein Smartphone.

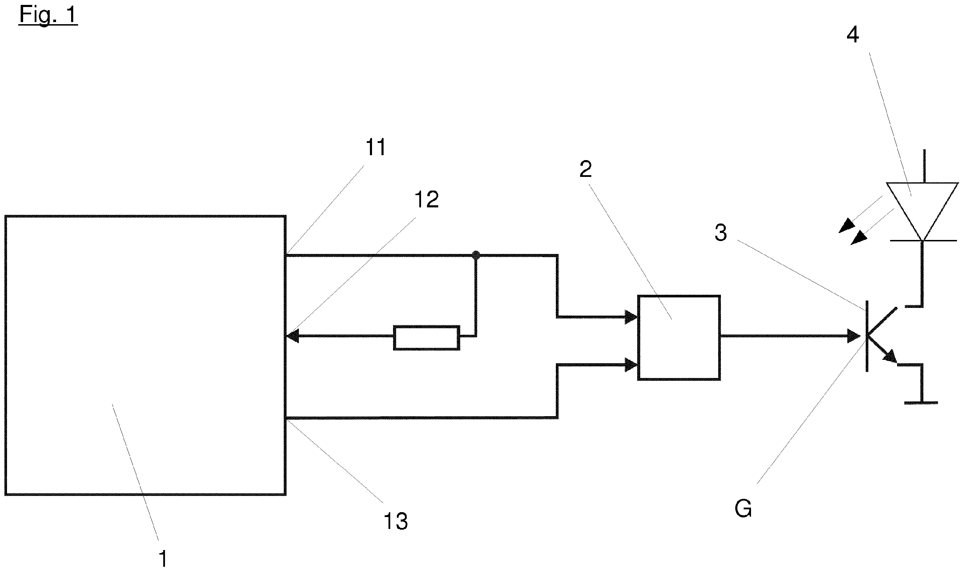

Der in Fig. 1 dargestellte Schaltkreis umfasst einen Mikrokontroller 1. Der Mikrokontroller 1 hat einen ersten Ausgang 11 für ein erstes moduliertes Signal, einen zweiten Ausgang 13 für ein zweites moduliertes Signal und einen ersten Eingang 12, der mit dem ersten Ausgang verbunden ist, und über welchen das erste modulierte Signal zum Mikrokontroller zurückgeführt ist. Bei dem Mikrokontroller kann es sich um einen handelsüblichen Mikrokontroller handeln, zum Beispiel vom Typ Microchip PIC 16F886.

Das erste, vom Mikrokontroller zur Verfügung gestellte Signal ist ein pulsweitenmoduliertes Signal. Das Puls-Pausen-Verhältnis dieses Signals ist so gewählt, dass damit die mittlere Helligkeit einer erfindungsgemäßen Leuchte auf einen gewünschten Wert eingestellt werden kann. Das erste modulierte Signal dient nicht der Informationsübertragung, sondern nur zur Einstellung der Helligkeit.

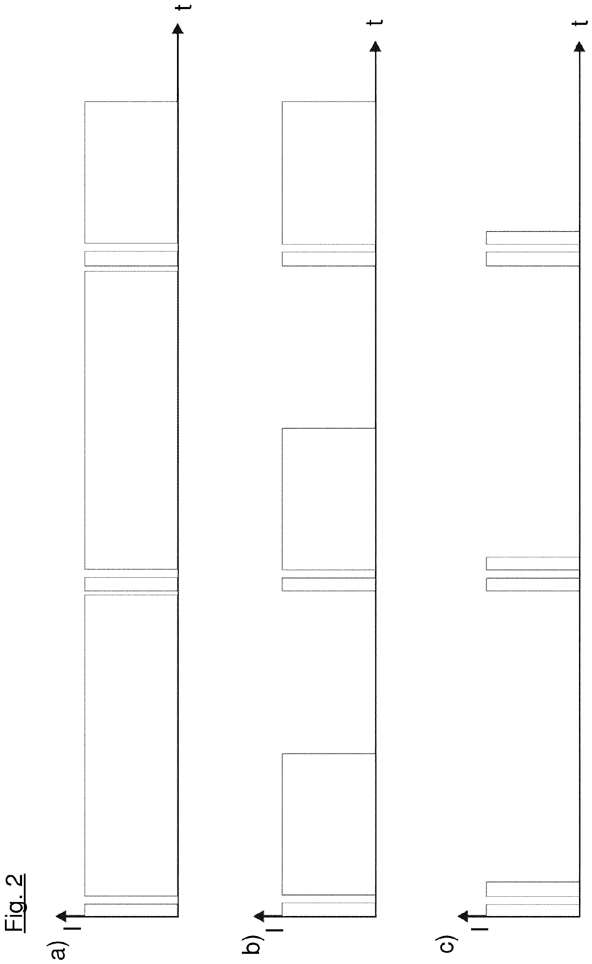

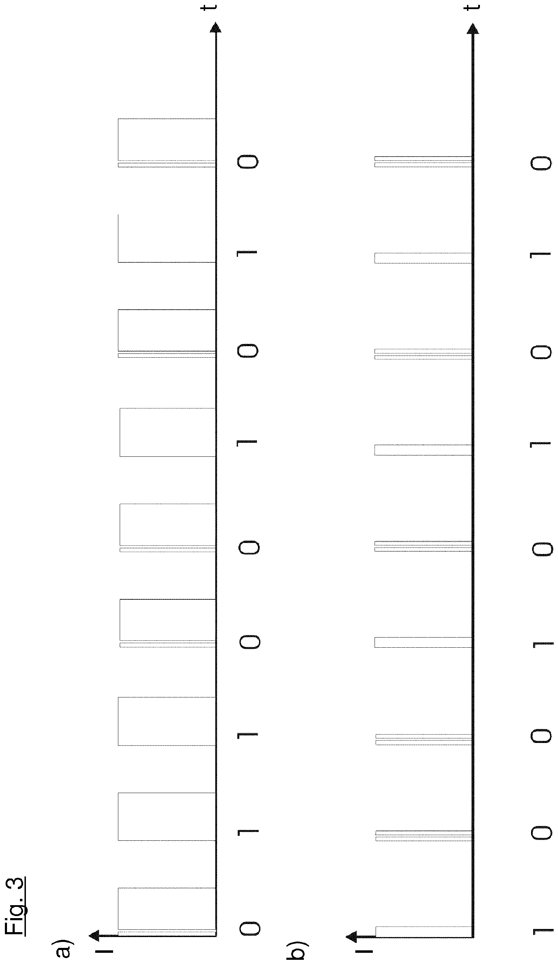

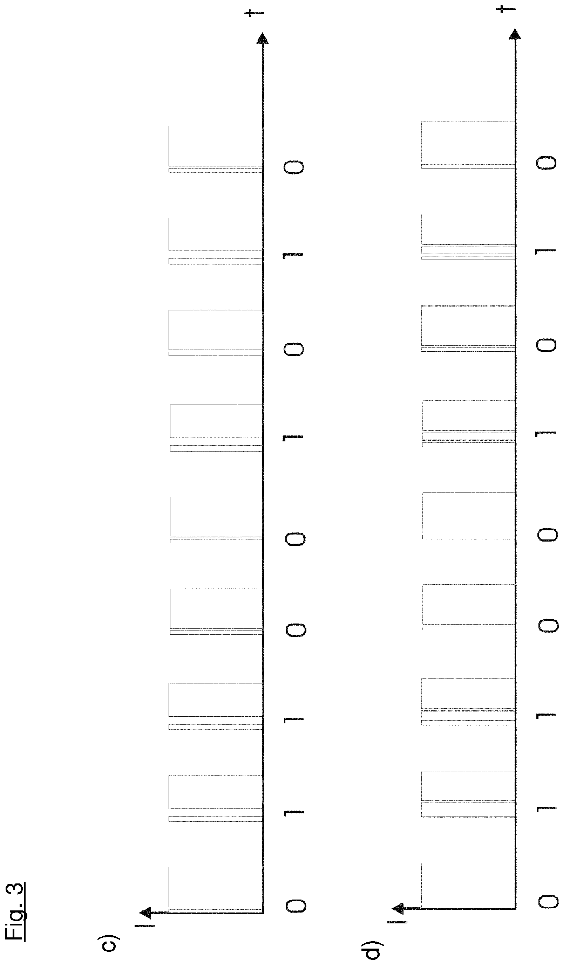

Das zweite modulierte Signal dagegen wird zur Übertragung von Informationen genutzt, insbesondere zur Übertragung von Leuchtenparametern. Die zu übertragenden Informationen können dem Mikrokontroller über einen nicht dargestellten Eingang zugeführt werden. Ebenso ist es möglich, dass die Informationen in dem Mikrokontroller abgelegt sind. Die Informationsübertragung erfolgt dadurch, dass der Mikrokontroller das zweite modulierte Signal erzeugt und dabei die zu übertragenden Informationen in dem zweiten Signal in der Form von Pulsen codiert. Dazu gibt es verschiedene Möglichkeiten, die anhand der Figuren 2 und 3 erläutert werden. Von Bedeutung ist, dass das zweite modulierte Signal getaktet ist, und zwar in Abhängigkeit von dem Takt des ersten modulierten Signals. Zur Erzeugung des zweiten modulierten Signals wird der Takt des ersten modulierten Signals übernommen. Dazu wird bei dem in der Fig. 1 dargestellten Schaltkreis das erste modulierte Signal zum ersten Eingang 12 geführt. Innerhalb des Mikrokontrollers wird eine Flankenerkennung durchgeführt. In den in den Figuren 2 und 3 dargestellten Fällen wird die steigende Flanke des ersten modulierten Signals erkannt. Verzögert zur steigenden Flanke wird dann während des Pulses des ersten modulierten Signals die Information übertragen, die übertragen werden soll. Die Information kann zum Beispiel bitweise übertragen werden, das heißt, dass in jedem Takt nur ein Bit der zu übertragenden Information übertragen wird.

Der erste und der zweite Ausgang 11, 13 sind mit Eingängen eines Und-Gatters 2 verbunden, welches das erste modulierte und das zweite modulierte Signal verknüpft. Das aus der Und-Verknüpfung resultierende Signal am Ausgang des Gatters 2 ist mit einem Steuereingang G eines Transistors 3 verbunden, der einen steuerbaren Schalter des erfindungsgemäßen Schaltkreises bildet. Dieser steuerbare Schalter dient zum gesteuerten Öffnen und Schließen eines Stromkreises mit einem Leuchtmittel, welches im Beispiel durch eine Leuchtdiode 4 symbolisiert ist, entsprechend dem Ausgangsignal des Und-Gatters 2, das heißt entsprechend dem Ergebnis der Und-Verknüpfung des ersten modulierten Signals und des zweiten modulierten Signals. Der Schalter 3 kann daher den Stromkreis durch das Leuchtmittel nur dann schließen, wenn beide modulierten Signale einen Wert 1 haben und am Ausgang des Und-Gatters 2 eine 1 ansteht.

Die in den Figuren 2 und 3 dargestellten Lichtsignale ergeben sich, wenn das Und-Gatter 2 den Schalter 3 mit einem entsprechenden Signal ansteuert.

Die in den Figuren 2a, 2b und 2d dargestellten Lichtsignale führen zu unterschiedlichen mittleren Helligkeiten des Leuchtmittels. Beim Beispiel gemäß Fig. 2a ist eine Helligkeit von 99%, bei dem Beispiel gemäß Fig. 2b ist eine Helligkeit von 50% und bei dem Beispiel gemäß Fig. 2c ist eine Helligkeit von 10% eingestellt. Einstellung der Helligkeit erfolgt durch das Puls-Pausen-Verhältnis des ersten modulierten Signals.

Unabhängig von der Helligkeit wird bei den Beispielen gemäß den Figuren 2a, 2b und 2d in einem festen Abstand von der steigenden Flanke des Pulses ein Bit der zu übertragenden Information vorgesehen. Dieses Bit kann den Wert 1 oder 0 annehmen. Im Fall des Wertes 1 bleibt der Puls ununterbrochen, im Fall des Werts 0 entsteht eine kleine Lücke von der Dauer eines zweiten Zeitintervalls, das zum Beispiel 100 µs lang sein kann. Im Vergleich dazu ist der Takt des Signals mit 10 ms sehr lang. Die mittlere Helligkeit des Lichtes wird für den Menschen nicht sichtbar beeinflusst. In den Figuren 2a, 2b und 2d ist nur die Übertragung von Nullen dargestellt.

In den Figuren 3a und 3b ist dagegen die Übertragung von Bitfolgen (Fig. 3a) 011001010 und (Fig. 3b) 100101010 dargestellt.

In der Fig. 3c ist eine alternative Codierung dargestellt. Sie unterscheidet sich von der Codierung der 1 und 0 dadurch, dass ähnlich wie bei einem Morsecode eine 0 durch eine kurze Unterbrechung des Pulses zur Einstellung der Helligkeit und eine 1 durch eine etwa doppelt so lange Unterbrechung des Pulses dargestellt wird. Im Fall der Fig. 3c wird die Bitfolge 011001010 übertragen.

Nochmals anders erfolgt die Codierung beim Beispiel gemäß Fig. 3d. In diesem Beispiel wird eine 0 durch eine einzelne Unterbrechung des Pulses und eine 1 durch zwei innerhalb eines Pulses kurz aufeinander folgende Unterbrechungen dargestellt. Im Beispiel der Fig. 3d wird ebenfalls die Bitfolge 011001010 übertragen.

Derartige Bitfolgen, die im von dem Leuchtmittel als für das menschliche Auge unsichtbare Unterbrechungen des Lichtes zu Tage treten, können von der in der Fig. 4 schematisch dargestellten Auslesevorrichtung 5 erkannt und decodiert werden. Nach einer Decodierung können die Informationen dann mittels eines Anzeigemittels 51 als Text oder dergleichen dargestellt werden.

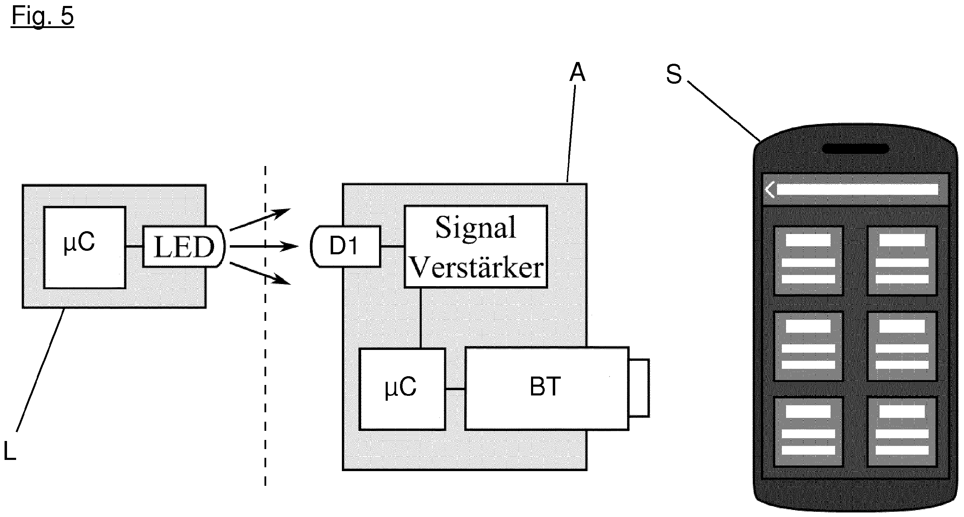

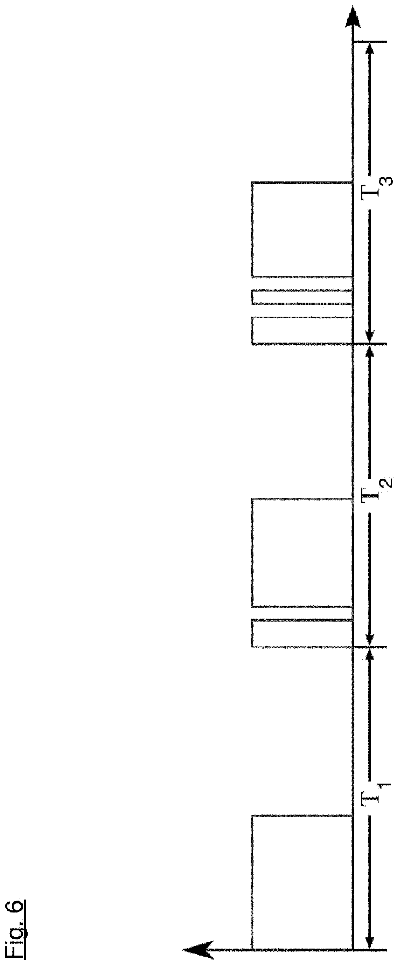

Die in der Fig. 5 dargestellte Anordnung weicht von der bisher anhand der Figuren 1 bis 4 beschriebenen Technik ab. Sie weist eine Leuchte L, eine Auslesevorrichtung A und ein Smartphone S auf. Die erfindungsgemäße Leuchte L hat eine LED, die durch ein erstes pulsbreitenmoduliertes Signal und ein zweites moduliertes Signal gesteuert wird, um einen Lichtstrom zu erzeugen, in dem Informationen codiert sind. Die Codierung erfolgt in der Art, dass ein Puls des ersten Signals im Falle einer Signalübertragung unterbrochen wird. Wird kein Signal übertragen, wird keine Information übertragen, wie es in Fig. 6 in der ersten Periode T1 dargestellt ist. Werden Informationen übertragen, wird pro Puls ein Bit übertragen. Durch eine Unterbrechung wird ein Bit mit dem Wert 0 übertragen, wie es in Fig. 6 in der zweiten Periode T2 dargestellt ist. Durch zwei Unterbrechungen des Pulses wird ein Bit mit dem Wert 1 übertragen, wie es in der dritten Periode T3 dargestellt ist. Diese Art der Codierung einer Information durch die Anzahl von Pulsen wird auch als Puls-Anzahl-Modulation (PAM) bezeichnet. Die Puls-Anzahl-Modulation ist zum Beispiel von dem in der Telefonie früher verwendeten Impulswählverfahren bekannt.

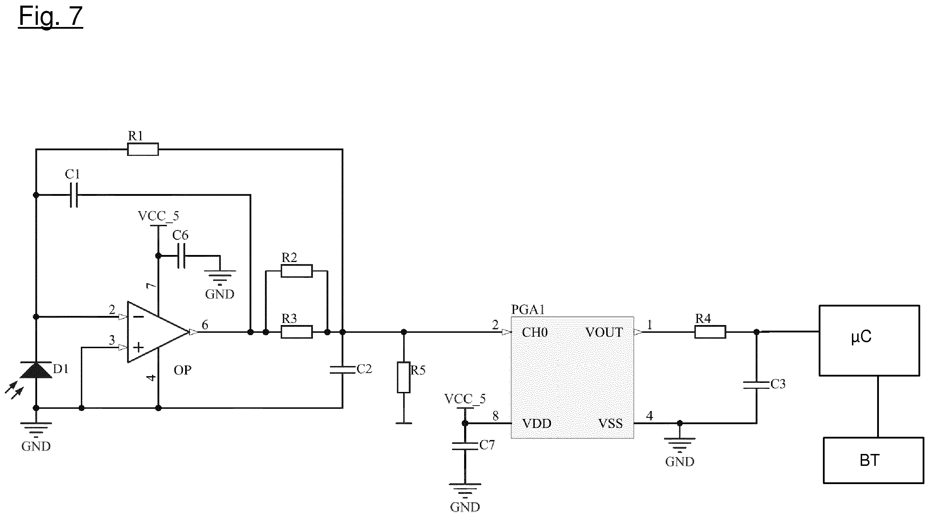

Die Auslesevorrichtung A einer erfindungsgemäßen Anordnung gemäß Fig. 7 weist eine Fotodiode D1 auf, deren Anode mit einem nicht-invertierenden Eingang eines Operationsverstärkers OP verbunden ist. Eine Kathode der Fotodiode ist mit dem invertierenden Eingang des Operationsverstärkers verbunden.

Ein Ausgang des Operationsverstärkers OP ist über einen Kondensator C1 mit dem invertierenden Eingang des Operationsverstärkers OP verbunden. Der Ausgang ist außerdem über eine Parallelschaltung von Widerständen R2, R3 und einen Widerstand R1 mit dem invertierenden und über die Parallelschaltung R2, R3 und einen Kondensator C2 mit dem nicht-invertierenden Eingang verbunden. Die Parallelschaltung R2, R3 ist außerdem über einen Widerstand mit dem Bezugspotential und unmittelbar mit einem Eingang CH1 eines programmierbaren Verstärkers PGA1 verbunden.

Einem Ausgang Vout des programmierbaren Verstärkers PGA ist ein Filter R4, C3 nachgeschaltet. Ein Ausgang des Filters R4, C3 ist mit einem Analogeingang eines Mikrocontrollers µC verbunden, in dem ein an diesem Analogeingang des Mikroprozessors µC anliegendes Signal digitalisiert, weiterverarbeitet und ausgewertet wird.

Ein von der Fotodiode aufgenommenes Lichtsignal wird in ein elektrisches Spannungssignal gewandelt und von dem rückgekoppelten Operationsverstärker OP verstärkt, damit es eine Signalstärke hat, die für eine weitere Verarbeitung und Auswertung notwendig ist. Die weitere Verstärkung durch den programmierbaren Verstärker PGA ist sinnvoll, um die Signalstärke an den Mikrocontroller µC anzupassen. Die Signalstärke vor dem programmierbaren Verstärker kann sehr stark schwanken, was zum Beispiel von der Entfernung der Fotodiode zur Notleuchte, von Streulicht- oder Fremdlichteinflüssen, der Leistung der Notleuchte und einigen anderen Faktoren abhängen kann. Die Weiterverarbeitung des Signals im Mikrokontroller µC kann in einer Ermittlung eines Verstärkungsfaktors liegen, auf den der programmierbare Verstärker PGA eingestellt wird. Die Weiterverarbeitung kann aber insbesondere auch in einer Decodierung der in dem Eingangsignal des Mikrocontrollers µC codierten Information liegen.

Ein Ausgang des Mikrocontrollers µC ist mit einer Bluetooth-Schnittstelle BT verbunden, über welche eine Weiterleitung des Ergebnisses der Auswertung im Mikrocontroller µC an ein Smartphone S, Tabletcomputer oder einen beliebigen anderen Computer erfolgen kann. Mittels des Smartphones S, Tabletcomputers oder des beliebigen anderen Computers kann das Ergebnis der Auswertung dargestellt werden.

## Patentansprüche

1. Verfahren zum bitweisen Übertragen von Leuchtenparametern über eine Schnittstelle einer Notleuchte (L) zu einer Auslesevorrichtung (A), das Verfahren aufweisend
- in einem Beleuchtungszustand der Notleuchte (L), Erzeugen von für das menschliche Auge sichtbaren Lichts durch die Notleuchte (L) zum Zwecke der Beleuchtung,
- im Beleuchtungszustand der Notleuchte (L), Modulieren des von der Notleuchte (L) erzeugten, für das menschliche Auge zum Zwecke der Beleuchtung sichtbaren Lichts, um die Leuchtenparameter in dem Licht für das menschliche Auge unsichtbar zu codieren,
- im Beleuchtungszustand der Notleuchte (L), Übertragen der Leuchtenparameter für das menschliche Auge unsichtbar im Wellenlängenbereich des sichtbaren Lichtes durch das sichtbare, modulierte Licht,
- im Beleuchtungszustand der Notleuchte (L), Pulsbreitenmodulieren des Lichtes durch ein pulsbreitenmoduliertes Signal, damit mittels gewähltem Tastgrad eine mittlere Helligkeit des von einem Leuchtmittel der Notleuchte (L) zum Zweck der Beleuchtung erzeugbaren Lichtes eingestellt wird, wobei das pulsbreitenmodulierte Signal eine Periode (T1, T2, T3) aufweisend einen Puls mit einer Pulsbreite während einer Einschaltzeit und eine Pulspause während einer Ausschaltzeit enthält, und wobei die Pulsbreite des pulsbreitenmodulierten Signals zur Einstellung der mittleren Helligkeit des Lichts vorgegeben wird,
- Unterbrechen des Pulses für ein erstes Zeitintervall oder höchstens zwei erste Zeitintervalle zum Zwecke des Codierens der Leuchtenparameter,
- wobei das erste Zeitintervall deutlich kürzer als die vorgegebene Pulsbreite ist,
- Übertagen eines Bits pro Periode (T1, T2, T3) mittels des pulsbreitenmodulierten Signals,
**gekennzeichnet durch**
- nach dem Ablauf des ersten Zeitintervalls bzw. der höchstens zwei ersten Zeitintervalle, Fortsetzen des Pulses und Verlängern des Pulses bis um das erste Zeitintervall oder die Summe der höchstens zwei ersten Zeitintervalle, so dass die Länge der Zeit, vom Beginn des Pulses bis zum Ende des Pulses abzüglich der Unterbrechungen, der ursprünglichen zur Einstellung der mittleren Helligkeit der Leuchte vorgegebenen Pulsbreite entspricht, und
- wobei die maximal Pulsbreite der Länge der Periode (T1, T2, T3) des pulsbreitenmodulierten Signals abzüglich des ersten Zeitintervalls oder der Summe der höchstens zwei ersten Zeitintervalle entspricht.

2. Notleuchte (L)
- wobei die Notleuchte (L) mindestens ein Leuchtmittel (4, LED) zum Erzeugen von Licht zum Zwecke der Beleuchtung hat und das Leuchtmittel (4, LED) zugleich eine Schnittstelle der Notleuchte bildet,
- wobei die Notleuchte (L) in einem Beleuchtungszustand zum Zwecke der Beleuchtung für das menschliche Auge sichtbares Licht erzeugt und über die Schnittstelle Leuchtenparameter bitweise zu einer Auslesevorrichtung (A) übertragbar sind,
- wobei die Notleuchte (L) ferner einen elektronischen Schaltkreis aufweist,
wobei der elektronische Schaltkreis geeignet und eingerichtet ist
- im Beleuchtungszustand der Notleuchte (L) das von der Notleuchte erzeugte, für das menschliche Auge zum Zwecke der Beleuchtung sichtbare Licht zu modulieren, um die Leuchtenparameter in dem Licht für das menschliche Auge unsichtbar zu codieren,
- wobei im Beleuchtungszustand der Notleuchte (L) durch das sichtbare, modulierte Licht die Leuchtenparameter für das menschliche Auge unsichtbar im Wellenlängenbereich des sichtbaren Lichtes übertragbar sind,
- wobei im Beleuchtungszustand der Notleuchte (L) das Licht durch ein mittels des elektronischen Schaltkreises erzeugbaren pulsbreitenmodulierten Signal pulsbreitenmodulierbar ist, um mittels gewähltem Tastgrad die mittlere Helligkeit des von dem Leuchtmittel zum Zweck der Beleuchtung erzeugbaren Lichtes einzustellen, wobei das pulsbreitenmodulierte Signal eine Periode (T1, T2, T3) aufweisend einen Puls mit einer Pulsbreite während einer Einschaltzeit und eine Pulspause während einer Ausschaltzeit enthält, und wobei die Pulsbreite des pulsbreitenmodulierten Signals zur Einstellung der mittleren Helligkeit des Lichts vorgegeben ist,
- wobei der elektronische Schaltkreis zum Unterbrechen des Pulses für ein erstes Zeitintervall oder höchstens zwei erste Zeitintervalle zum Codieren der Leuchtenparameter geeignet und eingerichtet ist,
- wobei das erste Zeitintervall deutlich kürzer als die vorgegebene Pulsbreite ist,
- wobei ein Bit pro Periode (T1, T2, T3) des pulsbreitenmodulierten Signals übertragen wird,
**dadurch gekennzeichnet, dass**
- der elektronische Schaltkreis zum Fortsetzen des Pulses nach Ablauf des ersten bzw. der höchstens zwei ersten Zeitintervalle und zum Verlängern des Pulses, dessen Breite zur Einstellung der mittleren Helligkeit des Lichtes vorgegeben ist, um die Länge des ersten Zeitintervalls oder der höchstens zwei ersten Zeitintervalle geeignet und eingerichtet ist,
- so dass die Länge der Zeit vom Beginn des Pulses bis zum Ende des Pulses abzüglich der Unterbrechungen der ursprünglichen zur Einstellung der Helligkeit der Leuchte vorgegebenen Pulsbreite entspricht,
- wobei die maximale Pulsbreite der Länge der Periode (T1, T2, T3) des pulsbreitenmodulierten Signals abzüglich des ersten Zeitintervalls oder der Summe der höchstens zwei ersten Zeitintervalle entspricht.

3. Anordnung aus einer Notleuchte (L) nach Anspruch 2 und einer Auslesevorrichtung (A) zum Auslesen von Leuchtenparametern, die durch die Notleuchte (L) übertragbar sind, die Auslesevorrichtung (A) umfassend:
- ein Erkennungsmittel, wobei das Erkennungsmittel einen Lichtsensor (D1) aufweist, der eingerichtet ist, das sichtbare Licht, in dem die Leuchtenparameter, mittels des elektronischen Schaltkreises, für das menschliche Auge unsichtbar im Wellenlängenbereich des sichtbaren Lichtes übertragen werden, aufzunehmen und in ein analoges elektrisches Signal zu wandeln,
- einen Decoder zum Decodieren der Leuchtenparameter aus dem analogen Signal,
- eine Schnittstelle (BT) zum Bereitstellen der decodierten Leuchtenparameter und
- und ein Wiedergabemittel zum optischen und/oder akustischen Darstellen der decodierten Leuchtenparameter.

4. Anordnung nach Anspruch 3, wobei das Erkennungsmittel ferner zumindest einen Verstärker (OP, PGA1) zum Verstärken des analogen elektrischen Signals aufweist, dessen Eingang mit einem Ausgang des Lichtsensors (D1) verbunden ist.

5. Anordnung nach Anspruch 3 oder 4, wobei das Erkennungsmittel ferner einen Tiefpass- oder Bandpassfilter zum Filtern des analogen elektrischen Signals des Lichtsensors (D1) und/oder ggf. des Verstärkers (OP, PGA1) aufweist.

6. Anordnung nach Anspruch 5, wobei der Decoder einen Mikrocontroller (1, µC) aufweist, mit welchem das analoge elektrische Signal digitalisierbar ist und die im digitalisierten Signal enthaltenen Leuchteparameter decodierbar sind.

7. Anordnung nach Anspruch 6, wobei die Schnittstelle (BT) eine Schnittstelle für eine drahtlose Kommunikation der decodierten Informationen zu einem Telefon (S), einem Handheld, einem Palmtop, einem Tablet-Computer, einem Pocketcomputer, einem PDA, einem Notebook, einem Subnotebook, einem E-Book-Lesegerät, einem GPS-Gerät, einem Laptop, einem PC o.ä. ist.

## Claims

1. Method for the bit-wise transmission of luminaire parameters via an interface of an emergency lamp (L) to a readout device (A), the method having
- in an illuminating state of the emergency lamp (L), generating light visible for the human eye by means of the emergency lamp (L) for the purpose of illumination,
- in the illuminating state of the emergency lamp (L), modulating the light visible for the human eye generated by the emergency lamp (L) for the purpose of illumination, in order to encode the luminaire parameters in the light in a manner invisible for the human eye,
- in the illuminating state of the emergency lamp (L), transmitting the luminaire parameters in a manner so as to be invisible for the human eye in the wavelength range of visible light by means of the visible modulated light,
- in the illuminating state of the emergency lamp (L), pulsewidth modulation of the light by a pulsewidth modulated signal, such that by means of selected duty cycle a medium brightness of the light, which can be generated by a lighting means of the emergency lamp (L) for the purposes of illumination, is set, wherein the pulsewidth modulated signal contains a period (T1, T2, T3) having a pulse with a pulsewidth during a switching on time and a pulse pause during a switching off time, and wherein the pulsewidth of the pulsewidth modulated signal is predetermined for setting the medium brightness of the light,
- interrupting the pulse for a first time interval or at most two first time intervals for the purpose of encoding the luminaire parameters,
- wherein the first interval is significantly shorter than the predetermined pulsewidth,
- transmitting one bit per period (T1, T2, T3) by means of the pulsewidth modulated signal,
**characterised by**
- after the culmination of the first time interval or of the at most two first time intervals, continuing the pulse and extending the pulse as far as the first time interval or the sum of the at most two first time intervals, such that the length of the time from the beginning of the pulse as far as the end of the pulse minus the interruptions is equal to the original pulsewidth predetermined for setting the medium brightness of the lamp, and
- wherein the maximum pulsewidth is equal to the length of the period (T1, T2, T3) of the pulsewidth modulated signals minus the first time interval or the sum of the at most two first time intervals.

2. Emergency lamp (L)
- wherein the emergency lamp (L) has at least one lighting means (4, LED) for generating light for the purpose of illumination and the lighting means (4, LED) forms at the same time an interface of the emergency lamp,
- when in the emergency lamp (L) in an illumination state generates light visible for the human eye for the purpose of illumination and via the interface luminaire parameters can be transmitted in a bit-wise manner to a readout device (A),
- wherein the emergency lamp (L) has furthermore an electronic circuit,
wherein the electronic circuit is suitable and configured
- in the illumination state of the emergency lamp (L) to modulate the light, generated by the emergency lamp, which is visible for the human eye for the purpose of illumination, in order to encode the luminaire parameters in the light in a manner invisible for the human eye,
- wherein in the illumination state of the emergency lamp (L) by means of the visible, modulated light the luminaire parameters can be transmitted in the wavelength range of visible light in a manner invisible for the human eye,
- wherein in the illumination state of the emergency lamp (L), the light can be pulsewidth modulated by means of a pulsewidth modulated signal which can be generated by means of the electronic circuit, in order by means of a selected duty cycle to set the medium brightness of the light generated by the lighting means for the purpose of illumination, wherein the pulsewidth modulated signal contains a period (T1, T2, T3) having a pulse with a pulsewidth during a switching on time and a pulse pause during a switching off time, and wherein the pulsewidth of the pulsewidth modulated signal is predetermined for the setting of the medium brightness of the light,
- wherein the electronic circuit is suitable and configured to interrupt the pulse for a first time interval or at most two first time intervals for encoding the luminaire parameters,
- wherein the first time interval is significantly shorter than the predetermined pulsewidth,
- wherein one bit is transmitted per period (T1, T2, T3) of the pulsewidth modulated signal,
**characterised in that**
- the electronic circuit is suitable and configured for the continuation of the pulse after the duration of the first of the most two first time intervals and for extending the pulse, the width of which is predetermined for setting the medium brightness of the light, by the length of the first time interval or of the at most two time intervals,
- such that the length of the time from the beginning of the pulse as far as the end of the pulse minus the interruptions is equal to the original pulsewidth predetermined for setting the brightness of the lamp,
- wherein the maximum pulsewidth is equal to the length of the period (T1, T2, T3) of the pulsewidth modulated signal minus the first time interval or the sum of the at most two first time intervals.

3. Arrangement comprising an emergency lamp (L) according to claim 2 and a readout device (A) for reading out luminaire parameters, which can be transmitted by the emergency lamp (L), the readout device (A) comprising:
- a detection means, wherein the detection means has a light sensor (D1) which is configured to capture the visible light, in which the luminaire parameters, by means of the electronic circuit, are transmitted in the wavelength range of visible light in a manner invisible for the human eye, and to convert it into an analogue electrical signal,
- a decoder for decoding the luminaire parameters from the analogue signal,
- an interface (BT) for providing the decoded luminaire parameters and
- and a rendering means for the optical and/or acoustic representation of the decoded luminaire parameters.

4. Arrangement according to claim 3, wherein the detection means furthermore has at least one amplifier (OP, PGA1) for amplifying the analogue electrical signal, the input of which is connected with an output of the light sensor (D1).

5. Arrangement according to claim 3 or 4, wherein the detection means has furthermore a lowpass or bandpass filter for filtering the analogue electrical signal of the light sensor (D1) and/or where appropriate of the amplifier (OP, PGA1).

6. Arrangement according to claim 5, wherein the decoder has a microcontroller (1, µC), with which the analogue electrical signal can be digitalised and the luminaire parameters contained in the digitalised signal can be decoded.

7. Arrangement according to claim 6, wherein the interface (BT) is an interface for a wireless communication of the decoded information to a telephone (S), a handheld, a palmtop, a tablet computer, a pocket computer, a PDA, a notebook, a subnotebook, an e-book reading device, a GPS device, a laptop, a PC or similar.

## Revendications

1. Procédé de transmission par bits de paramètres d'éclairage par l'intermédiaire d'une interface d'un éclairage de secours (L) à un dispositif de lecture (A), le procédé présentant
- dans un état d'illumination de l'éclairage de secours (L), la génération de lumière visible pour l'œil humain par l'éclairage de secours (L) à des fins d'illumination,
- dans l'état d'illumination de l'éclairage de secours (L), la modulation de la lumière produite pour l'éclairage de secours (L) visible par l'œil humain à des fins d'illumination, pour coder les paramètres d'éclairage dans la lumière qui sont invisibles pour l'œil humain,
- dans l'état d'illumination de l'éclairage de secours (L), la transmission des paramètres d'éclairage invisibles pour l'œil humain dans la gamme de longueurs d'onde de la lumière visible par l'intermédiaire de la lumière modulée visible,
- dans l'état d'illumination de l'éclairage de secours (L), la modulation d'impulsions en largeur de la lumière par l'intermédiaire d'un signal à modulation d'impulsions en largeur afin de régler, au moyen du degré d'activation sélectionné, une luminosité moyenne de la lumière pouvant être générée par une source lumineuse de l'éclairage de secours (L) aux fins de l'illumination, dans lequel le signal à modulation d'impulsions en largeur contient une période (T1, T2, T3) présentant une impulsion avec une largeur d'impulsion pendant un temps de marche et une pause d'impulsion pendant un temps d'arrêt, et dans lequel la largeur d'impulsion du signal à modulation d'impulsions en largeur est prédéterminée pour régler la luminosité moyenne de la lumière,
- l'interruption de l'impulsion pendant un premier intervalle de temps ou au plus deux premiers intervalles de temps aux fins du codage des paramètres d'éclairage,
- dans lequel le premier intervalle de temps est nettement plus court que la largeur d'impulsion prédéterminée,
- la transmission d'un bit par période (T1, T2, T3) au moyen du signal à modulation d'impulsions en largeur,
**caractérisé par**
- après l'expiration du premier intervalle de temps ou des au plus deux premiers intervalles de temps, la poursuite de l'impulsion et la prolongation de l'impulsion jusqu'au premier intervalle de temps ou de la somme des au plus deux premiers intervalles de temps de sorte que la durée, du début de l'impulsion à la fin de l'impulsion moins les interruptions, correspond à la largeur d'impulsion prédéterminée précédant le réglage de la luminosité moyenne de l'éclairage, et
- dans lequel la largeur d'impulsion maximale correspond à la durée de la période (T1, T2, T3) du signal à modulation d'impulsions en largeur moins le premier intervalle de temps ou la somme des au plus deux premiers intervalles de temps.

2. Éclairage de secours (L)
- dans lequel l'éclairage de secours (L) présente au moins une source lumineuse (4, LED) pour générer de la lumière aux fins de l'illumination et la source lumineuse (4, LED) forme en même temps une interface de l'éclairage de secours,
- dans lequel l'éclairage de secours (L) génère de la lumière visible pour l'œil humain dans un état d'illumination aux fins de l'éclairage et les paramètres de lumière peuvent être transmis bit par bit à un dispositif de lecture (A) par l'intermédiaire de l'interface,
- dans lequel l'éclairage de secours (L) présente en outre un circuit électronique,
dans lequel le circuit électronique est adapté et configuré pour
- dans l'état d'illumination de l'éclairage de secours (L), moduler la lumière produite pour l'éclairage de secours visible par l'œil humain à des fins d'illumination, pour coder les paramètres d'éclairage dans la lumière qui sont invisibles pour l'œil humain,
- dans lequel, dans l'état d'illumination de l'éclairage de secours (L) par l'intermédiaire de la lumière modulée visible, les paramètres d'éclairage invisibles pour l'œil humain dans la gamme de longueurs d'onde de la lumière visible peuvent être transmis,
- dans lequel, dans l'état d'illumination de l'éclairage de secours (L), la lumière peut être modulée par impulsion en largeur par un signal à modulation d'impulsions en largeur qui peut être généré au moyen du circuit électronique pour régler, au moyen du degré d'activation sélectionné, la luminosité moyenne de la lumière pouvant être générée par la source lumineuse aux fins de l'illumination, dans lequel le signal à modulation d'impulsions en largeur contient une période (T1, T2, T3) présentant une impulsion avec une largeur d'impulsion pendant un temps de marche et une pause d'impulsion pendant un temps d'arrêt, et dans lequel la largeur d'impulsion du signal à modulation d'impulsions en largeur est prédéterminée pour régler la luminosité moyenne de la lumière,
- dans lequel le circuit électronique est adapté et configuré pour interrompre l'impulsion pour un premier intervalle de temps ou au plus deux premiers intervalles de temps pour coder les paramètres d'éclairage,
- dans lequel le premier intervalle de temps est nettement plus court que la largeur d'impulsion prédéterminée,
- dans lequel un bit par période (T1, T2, T3) du signal à modulation d'impulsions en largeur est transmis,
**caractérisé en ce que**
- le circuit électronique est adapté et configuré pour poursuivre l'impulsion après l'expiration du premier ou des au plus deux premiers intervalles de temps et pour prolonger l'impulsion, dont la largeur est prédéterminée pour régler la luminosité moyenne de la lumière, par la durée du premier intervalle de temps ou des au plus deux premiers intervalles de temps,
- de sorte que la durée du début de l'impulsion à la fin de l'impulsion moins les interruptions, correspond à la largeur d'impulsion prédéterminée précédant le réglage de la luminosité de l'éclairage,
- dans lequel la largeur d'impulsion maximale correspond à la durée de la période (T1, T2, T3) du signal à modulation d'impulsions en largeur moins le premier intervalle de temps ou la somme des au plus deux premiers intervalles de temps.

3. Agencement d'un éclairage de secours (L) selon la revendication 2 et d'un dispositif de lecture (A) pour lire les paramètres d'éclairage qui peuvent être transmis par l'éclairage de secours (L), le dispositif de lecture (A) comprenant :
- un moyen de détection, dans lequel le moyen de détection présente un capteur de lumière (D1) qui est configuré pour recevoir la lumière visible dans laquelle les paramètres d'éclairage sont transmis au moyen du circuit électronique de manière invisible pour l'œil humain dans la gamme de longueurs d'onde de la lumière visible et pour la convertir en un signal électrique analogique,
- un décodeur pour décoder les paramètres d'éclairage à partir du signal analogique,
- une interface (BT) pour fournir les paramètres d'éclairage décodés, et
- et un moyen de reproduction pour afficher visuellement et/ou acoustiquement les paramètres d'éclairage décodés.

4. Agencement selon la revendication 3, dans lequel le moyen de détection présente en outre au moins un amplificateur (OP, PGA1) pour amplifier le signal électrique analogique, dont l'entrée est connectée à une sortie du capteur de lumière (D1).

5. Agencement selon la revendication 3 ou 4, dans lequel le moyen de détection présente en outre un filtre passe-bas ou passe-bande pour filtrer le signal électrique analogique du capteur de lumière (D1) et/ou, le cas échéant, de l'amplificateur (OP, PGA1).

6. Agencement selon la revendication 5, dans lequel le décodeur présente un microcontrôleur (1, µC) avec lequel le signal électrique analogique est numérisable et les paramètres d'éclairage contenus dans le signal numérisé sont décodables.

7. Agencement selon la revendication 6, dans lequel l'interface (BT) est une interface pour une communication sans fil des informations décodées vers un téléphone (S), un appareil portable, un palmtop, un ordinateur tablette, un ordinateur de poche, un PDA, un notebook, un subnotebook, une liseuse de livres électroniques, un appareil GPS, un ordinateur portable, un PC ou similaire.
